# EUROPEAN PATENT SPECIFICATION

(11) **EP 1 269 605 B1**
(45) Date of publication and mention of the grant of the patent: **26.05.2010**
(21) Application number: 01912637.4
(22) Date of filing: 08.03.2001
(51) Int. Cl.: H02K 11/00

(54) **ELECTRIC MOTOR**
ELEKTROMOTOR
MOTEUR ELECTRIQUE

(30) Priority: 10.03.2000 SE 0000792
(43) Date of publication of application: 02.01.2003
(73) Proprietor: AKTIEBOLAGET ELECTROLUX, 105 45 Stockholm (SE)
(72) Inventor: CARLSSON, Stefan, S-593 50 Västervik (SE)
(74) Representative: Samzelius, Roger Mikael
(86) International application number: PCT/SE2001/000503
(87) International publication number: WO 2001/067582

(56) References cited:
- DE-A1- 2 352 823
- DE-A1- 2 754 939
- DE-B1- 1 955 828

## Description

This invention relates to an electric motor comprising a stator with at least one stator winding, a rotor with a commutator and rotor windings and at least one brush which is pressed against the commutator the brush being slidably arranged in a brush holder and being in electrical connection with the stator winding the electric motor comprising a thermic motor protector protecting the motor against overheating.

Electric motors provided with thermic motor protectors are previously known (See documents DE-A1-195 22828 and DE-A1-2754939). The motor protectors are usually designed such that a heat sensitive element for instance a bimetallic spring switches off an electric circuit when the motor protector is heated which means that the current supply to the motor ceases. The motor protector is placed at a suitable place within or on the electric motor which means that it is neccessary to draw connecting electric conductors to this place. These installations complicate assembly and makes the motor more expensive.

The purpose of this invention is to achieve an arrangemant decreasing the need for material and said need for conductor installation and which simplifies assembly. This is achieved by means of an electric motor having the characteristics mentioned in the claims.

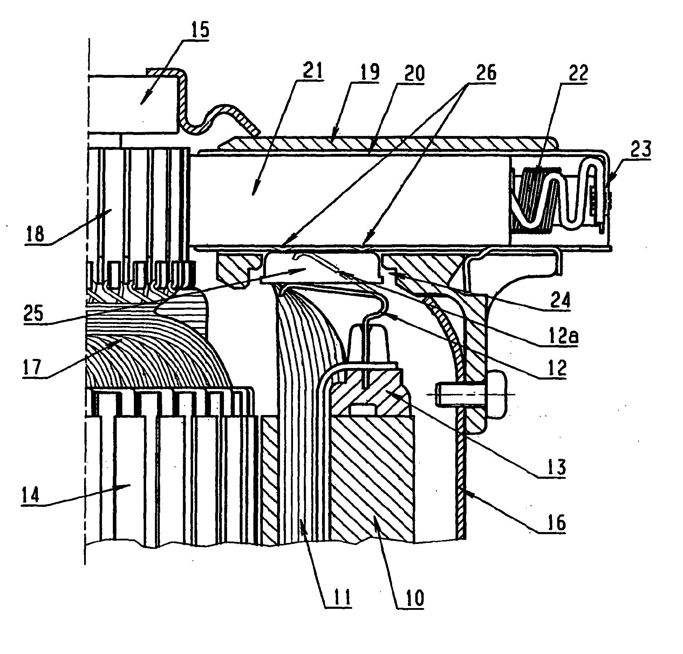

An embodiment of the invention will now be described with reference to the accompanying drawing which shows a vertical section through an electric motor according to the invention.

The electric motor comprises a stator 10 having at least one stator winding 11 with one end connected to a spring 12 which is fastened to a spring holder 13. The electric motor further comprises a rotor 14 supported by ball bearings 15 in a motor housing 16. The rotor in a conventional way is provided with rotor windings 17 which are connected to the commutator 18 of the rotor. The motor housing has a brush holder 19 of electrically insulated material, for instance plastic, the brush holder enclosing a sleeve 20 of electrically conducting material, for instance brass, which encloses a carbon brush 21 or the like. The sleeve 20 is fixed in the brush holder 19 whereas the brush 21 is slidably arranged in the sleeve 20 and is pressed against the commutator by means of a spring 22 which is inserted between the brush 21 and a folded end part 23 of the sleeve 20.

The brush holder 19 is provided with a recess or a pocket 24 which is placed between the spring 12 and the sleeve 20 the pocket enclosing a motor protector 25 such that one side of the motor protector which is one of the contact means for the switch in the motor protector abuts the sleeve 20 whereas its other side, which is the other contact means, is connected to the spring 12. In order to safeguard a good electric contact between the motor protector 25 and the sleeve 20 the sleeve is provided with one or several embossings 26 extending towards the motor protector. This means that the motor protector 25 is arranged in the electric connection between the stator winding 11 and the brush 21.

Thus, the arrangement shown has the advantage that the motor protector is very easy to assemble and to dismount since it is removably arranged in the pocket and is solely kept in position by the spring 12. It should also be mentioned that the spring 12a has such a shape and length that it abuts the sleeve 20 if a motor protector is not mounted in the pocket (see 12a in the figure).

## Claims

1. Electric motor comprising a stator (10) with at least one stator winding (11), a rotor (14) with a commutator (18) and rotor windings (17) and at least one brush (21) which is pressed against the commutator the brush being slidably arranged in a brush holder (19) comprising a sleeve (20) of electrically conducting material which at least partly surrounds the brush (21) and being in electrically conducting connection with the stator winding (11) the electric motor comprising a thermic motor protector (25) protecting the motor against overheating **characterized in that** the motor protector (25) is arranged between the stator winding (11) and the brush (21) such that the stator winding is connected to a resilient element (12) pressing the motor protector (25) against the sleeve (20).

2. Electric motor according to claim 1 **characterized in that** the brush holder (19) is provided with a recess or pocket (24) in which the motor protector (25) is placed.

3. Electric motor according to claim 2 **characterized in that** the motor protector (25) has two opposite sides which are contact means for a switch arranged in the motor protector one side abutting the sleeve (20) when the motor protector being placed in the pocket whereas the other side is in engagement with the resilient element (12).

4. Electric motor according to claim 2 or 3 **characterized in that** the resilient element (12) has such a shape and length that it abuts the sleeve (20) if a motor protector is missing in the pocket.

5. Electric motor according to any of claims 2-4 **characterized in that** the sleeve (20) is provided with one or several extending contact areas (26) intended to abut the motor protector (25).

6. Electric motor according to any of the preceding claims **characterized in that** the motor protector (25) is removably secured between the stator winding (11) and the sleeve (20).

7. Electric motor according to any of the preceding claims **characterized in that** the brush holder (19) is made of electrically insulated material such as plastic.

## Patentansprüche

1. Elektrischer Motor, umfassend einen Stator (10) mit wenigstens einer Statorwicklung (11), einen Rotor (14) mit einem Kommutator (18) und Rotorwicklungen (17) und wenigstens eine Bürste (21), welche gegen den Kommutator gedrückt wird, wobei die Bürste verschiebbar in einem Bürstenhalter (19) angeordnet ist, der eine Hülse (20) aus elektrisch leitendem Material umfasst, welche die Bürste (21) wenigstens teilweise umgibt und mit der Statorwicklung (11) in elektrisch leitender Verbindung steht, wobei der elektrische Motor einen thermischen Motorschutz (25) umfasst, der den Motor gegen Überhitzung schützt, **dadurch gekennzeichnet, dass** der Motorschutz (25) derart zwischen der Statorwicklung (11) und der Bürste (21) angeordnet ist, dass die Statorwicklung mit einem elastischen Element (12) verbunden ist, das den Motorschutz (25) gegen die Hülse (20) drückt.

2. Elektrischer Motor nach Anspruch 1, **dadurch gekennzeichnet, dass** der Bürstenhalter (19) mit einer Vertiefung oder Tasche (24) versehen ist, in welcher der Motorschutz (25) angeordnet ist.

3. Elektrischer Motor nach Anspruch 2, **dadurch gekennzeichnet, dass** der Motorschutz (25) zwei gegenüberliegende Seiten aufweist, welche Kontaktmittel für einen Schalter sind, der im Motorschutz angeordnet ist, wobei eine Seite an die Hülse (20) stößt, wenn der Motorschutz in der Tasche angeordnet ist, wohingegen die andere Seite mit dem elastischen Element (12) in Eingriff ist.

4. Elektrischer Motor nach Anspruch 2 oder 3, **dadurch gekennzeichnet, dass** das elastische Element (12) eine derartige Form und Länge aufweist, dass es an die Hülse (20) stößt, wenn ein Motorschutz in der Tasche fehlt.

5. Elektrischer Motor nach einem der Ansprüche 2 bis 4, **dadurch gekennzeichnet, dass** die Hülse (20) mit einem oder mehreren verlängerten Kontaktbereichen (26) versehen ist, die dazu bestimmt sind, an den Motorschutz (25) zu stoßen.

6. Elektrischer Motor nach einem der vorhergehenden Ansprüche, **dadurch gekennzeichnet, dass** der Motorschutz (25) lösbar zwischen der Statorwicklung (11) und der Hülse (20) gesichert ist.

7. Elektrischer Motor nach einem der vorhergehenden Ansprüche, **dadurch gekennzeichnet, dass** der Bürstenhalter (19) aus einem elektrisch isolierten Material, wie beispielsweise Kunststoff, hergestellt ist.

## Revendications

1. Moteur électrique comprenant un stator (10) comportant au moins un enroulement de stator (11), un rotor (14) comportant un commutateur (18) et des enroulements de rotor (17) et au moins un balai (21) qui est pressé contre le commutateur, le balai étant agencé de manière coulissante dans un porte-balais (19) comprenant une gaine (20) en un matériau électriquement conducteur qui entoure au moins partiellement le balai (21) et étant relié de manière électriquement conductrice à l'enroulement de stator (11), le moteur électrique comprenant un dispositif de protection thermique de moteur (25) protégeant le moteur d'une surchauffe, **caractérisé en ce que** le dispositif de protection de moteur (25) est agencé entre l'enroulement de stator (11) et le balai (21) de sorte que l'enroulement de stator est relié à un élément élastique (12) pressant le dispositif de protection de moteur (25) contre la gaine (20).

2. Moteur électrique selon la revendication 1, **caractérisé en ce que** le porte-balais (19) est pourvu d'un évidement ou poche (24) dans lequel le dispositif de protection de moteur (25) est placé.

3. Moteur électrique selon la revendication 2, **caractérisé en ce que** le dispositif de protection de moteur (25) comporte deux côtés opposés qui sont des moyens de contact pour un commutateur agencé dans le dispositif de protection de moteur, un côté étant contigu à la gaine (20) lorsque le dispositif de protection de moteur est placé dans la poche, tandis que l'autre côté est en prise avec l'élément élastique (12).

4. Moteur électrique selon la revendication 2 ou 3, **caractérisé en ce que** l'élément élastique (12) a une forme et une longueur telles qu'il est contigu à la gaine (20) si un dispositif de protection de moteur n'est pas présent dans la poche.

5. Moteur électrique selon l'une quelconque des revendications 2 à 4, **caractérisé en ce que** la gaine (20) est pourvue d'une ou de plusieurs zones de contact (26) étendues destinées à être contiguës au dispositif de protection de moteur (25).

6. Moteur électrique selon l'une quelconque des revendications précédentes, **caractérisé en ce que** le dispositif de protection de moteur (25) est fixé de manière amovible entre l'enroulement de stator (11) et la gaine (20).

7. Moteur électrique selon l'une quelconque des revendications précédentes, **caractérisé en ce que** le porte-balais (19) est réalisé en un matériau électriquement isolant tel qu'une matière plastique.
